# EUROPÄISCHE PATENTANMELDUNG

(11) **EP 1 158 038 A2**
(43) Veröffentlichungstag der Anmeldung: **28.11.2001**
(21) Anmeldenummer: 01112048.2
(22) Anmeldetag: 25.05.2001
(51) Int. Cl.: C10G 19/08, C10G 70/06

(54) **Verfahren und Vorrichtung zur Entfernung von Kohlenwasserstoffen aus der Ablauge von Laugewäschern**

(30) Priorität: 26.05.2000 DE 10026135
(71) Anmelder: BASF AKTIENGESELLSCHAFT, 67056 Ludwigshafen (DE)
(72) Erfinder: Kaiser, Wulf, Dr., 6612 Ascona (CH); Schmitt, Rolf, 67069 Ludwigshafen (DE)
(74) Vertreter: Isenbruck, Günter, Dr.

(57) **Zusammenfassung**

Die Erfindung betrifft ein Verfahren zur Entfernung von Kohlenwasserstoffen aus der Ablauge von Laugewäschern in Anlagen zur Spaltung von gesättigten Kohlenwasserstoffen, bei welchem die Ablauge in mindestens einer Kolonne (20) mit einem Strippgas, das die Kohlenwasserstoffe aufnimmt, im Gegenstrom in Kontakt gebracht wird, dadurch gekennzeichnet, daß die Strippung in einer Bodenkolonne (20) mit Kaskadenböden (21) durchgeführt wird.

## Beschreibung

Die vorliegende Erfindung betrifft ein Verfahren und Vorrichtung zur Entfernung von Kohlenwasserstoffen aus der Ablauge von Laugewäschern in Anlagen zur Spaltung von gesättigten Kohlenwasserstoffen.

Mittels Spaltung von gesättigten Kohlenwasserstoffen können petrochemische Grundstoffe, wie Olefine, hergestellt werden. Die eingesetzten Kohlenwasserstoffe, wie Flüssiggas, Naphta, Gasöl, Rohöl oder Schweröl, enthalten je nach Einsatzsatzrohstoff gewisse Mengen an Schwefel. Bei der thermischen Spaltung der Einsatzrohstoffe entsteht hieraus Schwefelwasserstoff. Daneben enthält das Spaltgas Kohlendioxid. Diese beiden Stoffe sollen nicht in die Endprodukte gelangen und stören die weitere Aufarbeitung der Spaltgase. In einer meist zweistufigen Absorption werden die beiden Sauergase daher aus dem Spaltgas mittels einer NaOH-Lauge entfernt. Hierfür werden Laugewäscher eingesetzt, in denen das Spaltgas und die NaOH-Lauge im Gegenstrom miteinander in Kontakt gebracht werden. Die Ablauge aus den Laugewäschern enthält hohe Konzentrationen an langkettigen Kohlenwasserstoffen, wie brennbarem Gas. Durch Entspannen und gleichzeitiges Strippen mit einem Strippgas, das die Kohlenwasserstoffe aufnimmt, werden diese aus der Ablauge entfernt. Dies geschieht in Strippkolonnen, in welchen das Strippgas mit der Ablauge in Kontakt gebracht wird.

Um einen hohen Stoffaustausch zwischen dem Strippgas und der Ablauge zu gewährleisten, werden die Strippkolonnen im Stand der Technik mit regellosen Füllkörpern, wie Pallringen, Raschigringen oder ähnlichen ausgestattet.

Nachteilig bei diesen Strippkolonnen ist, daß nach etwa 7 bis 14 Tagen die Strippleistung erheblich abnimmt. Grund hierfür ist, daß die Strippkolonne durch unlösliche organische Nebenkomponenten verstopft wird. Nur durch aufwendige Reinigungsvorgänge können diese entfernt werden.

Der vorliegenden Erfindung lag daher die Aufgabe zugrunde ein Verfahren und eine Vorrichtung zur Entfernung von Kohlenwasserstoffen aus der Ablauge von Laugewäschern zur Reinigung von Spaltgas in Anlagen zur thermischen Spaltung von gesättigten Kohlenwasserstoffen bereitzustellen, die wirtschaftlich und zuverlässig arbeiten. Insbesondere sollen die Nachteile des Standes der Technik vermieden werden.

Demgemäß wird bereitgestellt ein Verfahren zur Entfernung von Kohlenwasserstoffen aus der Ablauge von Laugewäschern in Anlagen zur Spaltung von gesättigten Kohlenwasserstoffen, bei welchem die Ablauge in mindestens einer Kolonne mit einem Strippgas, das die Kohlenwasserstoffe aufnimmt, im Gegenstrom in Kontakt gebracht wird, wobei die Strippung in einer Bodenkolonne mit Kaskadenböden durchgeführt wird.

Des weiteren wird bereitgestellt eine Vorrichtung zur Entfernung von Kohlenwasserstoffen aus der Ablauge von Laugewäschern in Anlagen zur Spaltung von gesättigten Kohlenwasserstoffen, welche mindestens eine Kolonne aufweist, in welcher die Ablauge mit einem Strippgas, das die Kohlenwasserstoffe aufnimmt, im Gegenstrom in Kontakt gebracht wird, wobei es sich bei der Kolonne um eine Bodenkolonne mit Kaskadenböden handelt.

Geeignete Strippgase, die im Rahmen der vorliegenden Erfindung eingesetzt werden können, sind Methan, Wasserstoff oder Stickstoff oder eine Mischung derselben. Bevorzugt wird als Strippgas methanhaltiges Heizgas eingesetzt, das vorzugsweise ein interner Stoffstrom aus der Spaltanlage ist. Eine methanhaltige Heizgasfraktion wird bei der Auftrennung des Spaltgases erhalten. Dieses kann im Rahmen der vorliegenden Erfindung als Strippgas eingesetzt werden.

Mit Hilfe des erfindungsgemäßen Strippverfahrens können langkettige Kohlenwasserstoffe wie C₅₊-Kohlenwasserstoffe sowie Aromaten wie Benzol aus der Ablauge entfernt werden.

Die Strippung der Ablauge wird vorzugsweise bei Temperaturen von 15 bis 55 °C, weiter bevorzugt von 25 bis 45 °C und besonders bevorzugt von 30 bis 40 °C durchgeführt. Der Druck in der Strippkolonne beträgt vorzugsweise 0,5 bis 2 bar, weiter bevorzugt 1 bis 2 bar und besonders bevorzugt 1,2 bis 1,8 bar.

Die Strippkolonne wird bei dem erfindungsgemäßen Verfahren mit einer Flüssigkeitsbelastung betrieben, die gegenüber derer in Füllkörperkolonnen um vorzugsweise 30 bis 60%, weiter bevorzugt um 40 bis 60% und besonders bevorzugt um etwa 50% höher liegt.

Bei der Strippkolonne handelt es sich um eine Bodenkolonne mit Kaskadenböden. Unter Kaskadenböden versteht man Böden, die kaskadenförmig in der Kolonne angeordnet sind. Vorzugsweise weist die Kolonne gewölbte Kaskadenböden auf. Die Ablauge wird bei dem Strippverfahren in der Kolonne vorzugsweise über diese gewölbten Kaskadenböden geführt. Die Wölbung der Böden erstreckt sich vorzugsweise über den gesamten Durchmesserbereich der Böden. Die Kaskadenböden können schalenförmig oder kugelschalenförmig gewölbt sein, wobei es sich um eine von oben gesehen konvexe Wölbung handelt. Bei einer schalenförmigen Wölbung weisen die Kaskadenböden Wölbungsradien auf, die über den Durchmesserbereich der Böden variieren können. Bei einer kugelschalenförmigen Wölbung ist der Wölbungsradius über den Durchmesserbereich der Böden konstant. Die Kaskadenböden weisen vorzugsweise eine geschlossene Oberfläche auf, d.h. es befinden sich keine Durchgangslöcher, Ventile oder Glocken in bzw. auf diesen Böden.

Die Kolonne weist neben den Kaskadenböden vorzugsweise des weiteren trichterförmige Flüssigkeitsverteiler auf, welche die Ablauge auf die Kaskadenböden führen. Bevorzugt werden Flüssigkeitsverteiler mit Konen eingesetzt, die sich nach unten hin verjüngen und einen Neigungswinkel α von vorzugsweise 40 bis 80°, weiter bevorzugt von 50 bis 70° und besonders bevorzugt von 55 bis 65° gegenüber der Kolonnenachse besitzen.

Die Kaskadenböden sind bezogen auf den Querschnitt der Strippkolonne vorzugsweise mittig in einem zentralen Bereich, die Flüssigkeitsverteiler in einem Randbereich, angeordnet. Im Rahmen der vorliegenden Erfindung weist die Kolonne einen Innendurchmesser D_{K} und die Kaskadenböden Durchmesser D_{B} auf, wobei die Durchmesser vorzugsweise im Verhältnis D_{K}/D_{B} von 1,25 bis 1,85, weiter bevorzugt von 1,40 bis 1,70 und besonders bevorzugt von 1,50 bis 1,60 zueinander stehen. Die Flüssigkeitsverteiler weisen vorzugsweise Innendurchmesser D_{Fi} auf, die kleiner oder gleich dem Durchmesser D_{B} der Kaskadenböden sind. Das Verhältnis D_{Fi}/D_{B} beträgt vorzugsweise 0,65 bis 1, weiter bevorzugt 0,75 bis 1 und besonders bevorzugt 0,85 bis 0,9. Die Flüssigkeitsverteiler besitzen vorzugsweise Außendurchmesser D_{Fa}, die etwa dem Innendurchmesser D_{K} der Kolonne entsprechen. Die Flüssigkeitsverteiler bzw. Konen sind bevorzugt mit Randabdichtungen versehen, die derart gestaltet und angeordnet sind, daß keine Ablauge zwischen Flüssigkeitsverteiler und Innenwand der Kolonne passieren kann.

Die Kaskadenböden sind bevorzugt mittels Stützen auf den Flüssigkeitsverteilern abgestützt und somit in der Kolonne angeordnet. Die Flüssigkeitsverteiler ihrerseits sind vorzugsweise mittels Haltestangen, an denen die Flüssigkeitsverteiler axialfest angeordnet sind, ortsfest in der Kolonne angeordnet.

Die vorliegende Erfindung weist zahlreiche Vorteile auf. Bei dem erfindungsgemäßen Verfahren und der erfindungsgemäßen Vorrichtung werden in der Ablauge befindliche organischen Feststoffe, die vorwiegend während der Strippung anfallen, mit der Ablauge aus der Strippkolonne mit ausgetragen. Die Feststoffe lagern sich auf den Kaskadenböden der Bodenkolonne nicht ab und somit treten keine Verstopfungen in der Strippkolonne auf, wie bei Verfahren und Vorrichtungen des Standes der Technik mit Füllkörperkolonnen beobachtet. Die Strippung verläuft insofern störungsfrei. Häufige Ausfallzeiten durch aufwendige Reinigungsvorgänge werden vermieden. Das erfindungsgemäße Strippverfahren zur Entfernung von Kohlenwasserstoffen aus der Ablauge von Sauergaswäschern in Anlagen zur thermischen Spaltung von gesättigten Kohlenwasserstoffen arbeitet somit sehr wirtschaftlich.

Weitere Vorteile, Merkmale und Anwendungsmöglichkeiten der Erfindung werden nun anhand der beigefügten Figuren erläutert. Es zeigt:
- Fig. 1: einen Ausschnitt aus einer Anlage zur thermischen Spaltung von gesättigten Kohlenwasserstoffen betreffend die Laugewäsche zur Sauergasentfernung aus Spaltgas.
- Fig. 2: einen Längsschnitt durch einen Abschnitt der Strippkolonne 20 aus Fig. 1.
- Fig. 3: einen Querschnitt durch die Strippkolonne 20 aus Fig. 2 entlang der Linie A-A.

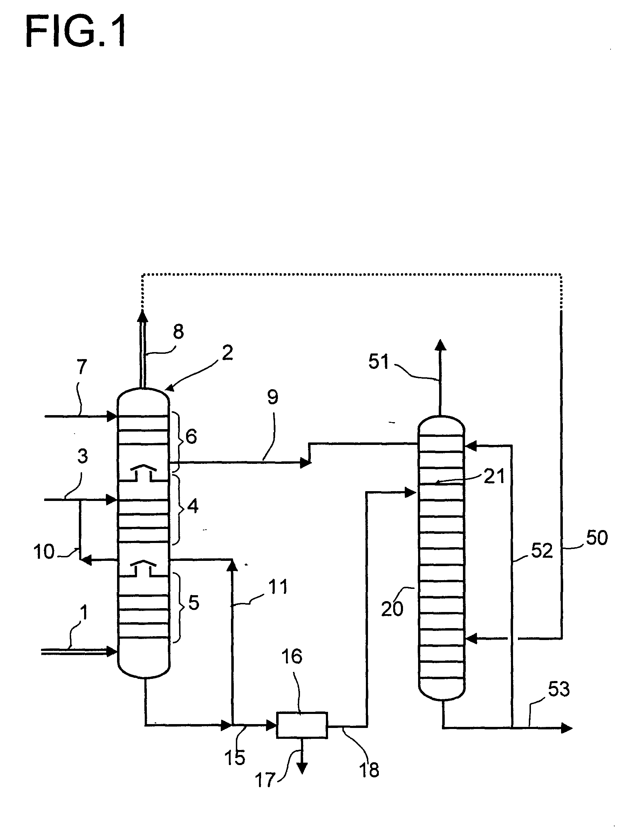

Fig. 1 zeigt einen Ausschnitt aus einer Anlage zur thermischen Spaltung bzw. zum Cracken (Pyrolyse) von gesättigten Kohlenwasserstoffen. Fig. 1 betrifft die Sauergasentfernung aus dem Spaltgas mittels Laugewäsche mit anschließender Reinigung der Ablauge.

Hauptprodukte der thermischen Spaltung sind niedere Olefine, wie Ethylen, Propen, Butadien. Als Einsatzstoffe werden Methan, Flüssiggas, Naphta oder Gasöle verwendet. Die Spaltung von Naphta erfolgt überwiegend in Gegenwart von Wasserdampf im Mitteltemperaturbereich von etwa 900 °C (Steam-Cracken). Hierfür werden beispielsweise von außen befeuerte Röhrenöfen (nicht dargestellt) eingesetzt, durch welche das Naphta/Dampf-Gemisch zur Spaltung der gesättigten Kohlenwasserstoffe geleitet wird.

Das durch die Spaltung erhaltende Spaltgas wird nachfolgend der Spaltung aufbereitet und in die einzelnen Fraktionen aufgetrennt.

Die in dem Spaltgas enthaltenen Spaltprodukte sind in bezug auf den Zerfall in die Elemente Wasserstoff und Kohlenstoff in dem Temperaturbereich, in dem die Spaltung durchgeführt wird, thermodynamisch instabil. Um einen weiteren unerwünschten Zerfall zu vermeiden, wird das Spaltgas schnell abgekühlt (gequenscht). Die Quenchung erfolgt in Wärmetauschern (nicht dargestellt) mit Speisewasser als Kühlmittel, wobei Hochdruckdampf erzeugt wird. Anschließend erfolgt eine weitere Absenkung der Spaltgastemperatur durch direktes Einspritzen von Öl in den Spaltgasstrom und eine Ölwäsche zur Entfernung der schwersten Kohlenwasserstoffe. Nachfolgend wird das Spaltgas in mehreren Stufen verdichtet.

In dem Spaltgas sind Kohlendioxid und Schwefelwasserstoff in geringen Konzentrationen enthalten. Diese Stoffe sollen nicht in die Endprodukte gelangen und stören die weitere Aufarbeitung der Spaltgase. Die beiden Stoffe werden nach den ersten Kompressorstufen (nicht dargestellt) durch eine Wäsche mit NaOH-Lauge (Sauergaswäsche) bis auf etwa 3 ppm entfernt. Es handelt sich hierbei um ein Absorptionsverfahren.

Das auf etwa 20 bis 35 bar, vorzugsweise etwa 25 bis 30 bar vorkomprimierte Spaltgas wird über eine Leitung 1 in eine Absorptionskolonne 2 geleitet, in welcher die Laugewäsche durchgeführt wird. Über eine Leitung 3 wird frische Lauge in die Kolonne 2 eingeleitet. Die Lauge und das Spaltgas werden im Gegenstrom geführt: Das Spaltgas durchströmt die Kolonne von unten nach oben; die Lauge durchströmt die Kolonne 2 hierzu im Gegenstrom von oben nach unten. Die Laugewäsche findet in einem mittleren Teil 4 und unteren Teil 5 der Kolonne 2 bei etwa 20 bis 40 °C statt. In einem oberen Teil 6 der Kolonne 2 wird das von Sauergasen befreite Spaltgas mit Frischwasser gewaschen, welches am Kopf der Kolonne über eine Leitung 7 mit einer Temperatur von etwa 50 bis 70 °C zugeführt wird. Alle drei Kolonnenabschnitte 4, 5 und 6 weisen als Kolonneneinbauten zum Stoffaustausch zwischen flüssiger Lauge und Spaltgas Böden auf.

Das gereinigte Spaltgas verläßt die Kolonne 2 über Kopf über eine Leitung 8. Das verbrauchte Waschwasser verläßt die Kolonne 2 über eine Leitung 9. Die Lauge wird innerhalb des mittleren Kolonnenabschnitts 4 und des unteren Kolonnenabschnitts 5 in den Umläufen 10 und 11 im Kreislauf geführt. Die Ablauge aus der Laugewäsche wird aus dem Sumpf der Kolonne über eine Leitung 15 abgezogen.

Nach der Laugewäsche zur Sauergasentfernung wird das Spaltgas weiter komprimiert, gekühlt und getrocknet. Anschließend wird das Spaltgas in einem Kälteprozeß mittels Rektifikation in die einzelnen Fraktionen bzw. Produkte aufgetrennt. (Beides nicht dargestellt)

Zuerst wird die Ablauge in einen Trennbehälter (Phasenabscheider) 16 eingeleitet. In diesem erfolgt die Abscheidung von Benzin, welches sich während der Laugewäsche in Kolonne 2 in der Lauge angesammelt hat. Benzin wird als die leichtere Phase über eine Leitung 17 abgezogen.

Die Ablauge aus der Laugewäsche enthält nach verlassen des Trennbehälters 16 noch hohe Konzentrationen an Kohlenwasserstoffen, insbesondere langkettige Kohlenwasserstoffe (C₅₊) und gegebenenfalls Aromaten wie Benzol, welche sich während der Laugewäsche in der Ablauge angesammelt haben. Diese müssen aus der Ablauge entfernt werden.

Die Entfernung der Kohlenwasserstoffe erfolgt in einer Strippkolonne 20. Die Ablauge wird hierbei auf einen Druck von etwa 0,5 bis 2, vorzugsweise 1,5 bar entspannt und mit einem Strippgas bei einer Temperatur von etwa 30 bis 40 °C gestrippt. Als Strippgas wird ein methanhaltiges Heizgas verwendet.

Die Ablauge wird über die Leitung 18 der Strippkolonne 20 an ihrem oberen Ende zugeführt. Die Ablauge durchströmt die Kolonne 20 von oben nach unten. Im Gegenstrom hierzu, also von unten nach oben, wird das Strippgas geführt, welches über eine Leitung 50 der Kolonne 20 an ihrem unteren Ende zugeführt wird.

Das methanhaltige Heizgas, welches als Strippgas verwendet wird, ist ein interner Strom der Spaltanlage. Die interne Verbindung der Stoffströme soll durch die gestrichelte Linie in Fig. 1 veranschaulicht werden, die sich vom Spaltgasstrom bis zur Leitung 50 erstreckt.

Das methanhaltige Strippgas nimmt bei dem Strippvorgang in der Kolonne 20 die Kohlenwasserstoffe aus der Ablauge auf und verläßt die Kolonne 20 über Kopf über eine Leitung 51. Das mit den Kohlenwasserstoffen aus der Ablauge angereicherte Strippgas aus Leitung 51 wird zusammen mit der methanhaltigen Heizgasfraktion aus der C₁/C₂-Rektifikationstrennkolonne als Einsatzprodukt für die thermische Spaltung verwendet.

Die Ablauge wird bei der Strippung in einem Umlauf 52 im Kreislauf geführt, wobei die Ablauge am unteren Ende der Kolonne 20 abgezogen wird und der Kolonne über den Umlauf 52 am oberen Ende wieder zugeführt wird.

Es handelt sich um ein kontinuierliches Strippverfahren. Über die Leitung 18 wird kontinuierlich zu reinigende Ablauge der Kolonne 20 zugeführt und über eine Leitung 53 die von Kohlenwasserstoffen abgereinigte Ablauge abgezogen und zur weiteren Aufarbeitung weitergeleitet.

Um in der Strippkolonne 20 einen guten Stoffaustausch zwischen dem Strippgas als Gasphase und der Ablauge als Flüssigphase zu gewährleisten, weist die Kolonne 20 Kolonneneinbauten auf.

Die vorstehend erwähnten Kohlenwasserstoffe, die mittels Strippung aus der Ablauge entfernt werden sollen, liegen in der Ablauge auch in Form von Monomeren oder Polymeren vor. Durch die Strippung mit methanhaltigen Heizgas sinkt in der Ablauge die Löslichkeit für die Monomere oder Polymere, wodurch diese zum Teil als Feststoffe ausfallen. Daneben polymerisieren Monomere zu Polymeren, die ebenfalls als Feststoffe ausfallen.

Die Strippkolonne 20 weist als Kolonneneinbauten deshalb unter anderem Böden 21 auf, die derart gestaltet und in der Strippkolonne 20 angeordnet sind, daß aus der Ablauge ausfallende Feststoffe sich nicht absetzen können und die Funktion der Böden 21 dadurch nicht beeinträchtigt wird. Die Feststoffe lagern sich nicht ab und werden mit der Ablauge zusammen aus der Strippkolonne 20 ausgetragen.

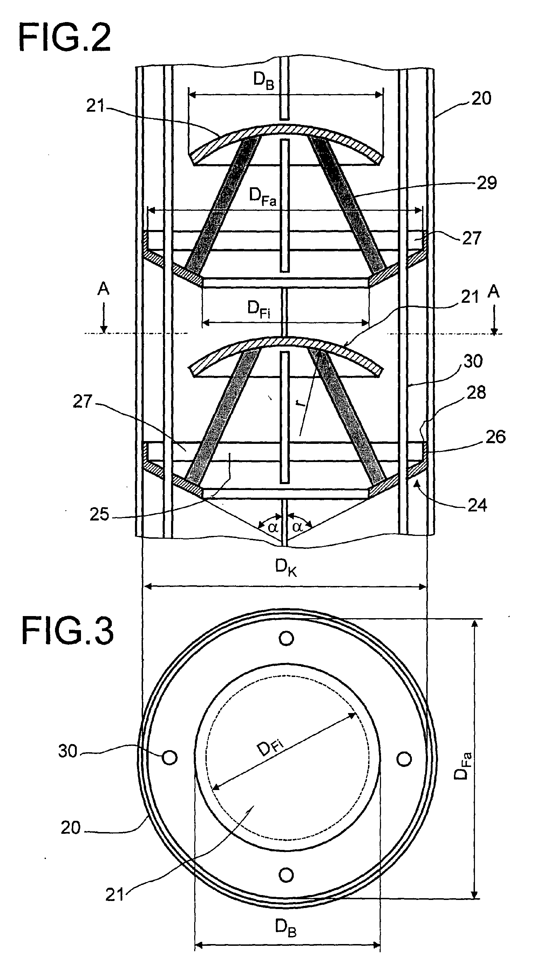

In Fig. 2 ist eine mögliche Ausführungsform solcher Böden 21 dargestellt. Fig. 2 zeigt einen Längsschnitt durch einen Abschnitt der Strippkolonne 20 aus Fig. 1. Die Böden 21 sind gewölbt und rotationssymmetrisch gestaltet. Die Wölbung erstreckt sich über den gesamten Durchmesserbereich der Böden 21. Sie besitzen die Form einer gewölbten Scheibe. Die Böden 21 sind in der Kolonne vertikal übereinander, d.h. kaskadenförmig angeordnet. Sie weisen eine geschlossene Oberfläche auf, d.h. es befinden sich keine Durchgangslöcher, Ventile oder Glocken in bzw. auf diesen. Die Böden 21 bestehen aus laugebeständigem Metallblech und weisen Dicken von etwa 1 bis 5 mm, vorzugsweise 2 bis 4 mm auf. In Strömungsrichtung der Ablauge sind die Böden 21 konvex gewölbt, in Strömungsrichtung des Strippgases sind die Böden 21 konkav gewölbt. Die Strippkolonne weist einen Innendurchmesser D_{K}, die Böden einen Durchmesser D_{B} auf. Die beiden Durchmesser verhalten sich im Verhältnis: D_{K}/D_{B} von etwa 1,5 bis 1,6 zueinander. Die Böden sind koaxial zur Kolonnenachse 23 angeordnet. Sie weisen im vorliegenden Ausführbeispiel die Form von Kugelkalotten auf. Die Wölbungsradien r sind in diesem Fall über den Durchmesserbereich D_{B} der Böden 21 konstant. Die Böden 21 können aber auch schalenförmig gewölbt sein (nicht dargestellt), was bedeutet, daß die Wölbungsradien der Böden 21 über den Durchmesserbereich D_{B} der Böden 21 variieren können. Der Mittelpunkt der Kugelkalotte liegt auf der Kolonnenachse 23. Die Böden 21 sind einstückig ausgebildet.

Des weiteren weist die Kolonne 20 Flüssigkeitsverteiler 24 auf, welche die flüssige Ablauge auf die Kolonnenböden 21 führen. Die Flüssigkeitsverteiler 24 befinden sich in vertikaler Richtung zwischen den Kolonnenböden 21. Zwischen jedem der Kolonnenböden 21 befindet sich ein Flüssigkeitsverteiler 24.

Die Flüssigkeitsverteiler 24 sind trichterförmig mit Konen 25 gestaltet, die einen Innendurchmesser D_{Fi} und einen Außendurchmesser D_{Fa} aufweisen. Der Außendurchmesser D_{Fa} der Flüssigkeitsverteiler 24 ist etwas kleiner als der Durchmesser D_{K} der Kolonne. Der Innendurchmesser D_{Fi} der Flüssigkeitsverteiler ist kleiner oder gleich dem Durchmesser D_{B} der Böden 21. Das Verhältnis der Durchmesser D_{Fi}/D_{B} beträgt etwa 0,85 bis 0,9. Die Konen 25 verengen sich nach unten hin und weisen dabei einen Neigungswinkel α von etwa 55 bis 65° zur Kolonnenachse 23 auf. Die Böden 21 und die Konen 25 können aus dem gleichen Material bestehen.

Die Flüssigkeitsverteiler 24 bzw. Konen 25 weisen jeweils an ihren äußeren Rändern Randabdichtungen 26 auf, damit keine Ablauge zwischen den Flüssigkeitsverteilern 24 und der Innenwand der Kolonne 20 passieren kann. Die Randabdichtungen 26 bestehen in vorliegenden Ausführungsbeispiel aus zylinderförmigen Ringen 27 und dünnen Bändern 28; beide aus Metallblech. Die Ringe 26 sind mit den Konen 25 fest verbunden, beispielsweise durch Schweißen. Die zylinderförmigen Ringe 26 sind an den äußeren Rändern der Konen 25 parallel zu Kolonnenachse 23 angeordnet. Diese können mit den Konen 25 auch einstückig ausgebildet sein. An der Außenseite der Ringe 26 sind dünne Bänder 28 angebracht, die in Richtung der Innenwand der Kolonne 20 zur Abdichtung in einem oberen Bereich als Kragen abgebogen sind.

Die Abstützung der Böden 21 in der Kolonne 20 erfolgt über Stützen 29 auf den Flüssigkeitsverteilern 24. Im vorliegenden Ausführbeispiel sind die Kolonnenböden 21 jeweils durch vier gleichmäßig über den Umfang verteilte Stützen 29 abgestützt. Die Stützen 29 werden gebildet aus Metallblechstreifen die mit den Böden 21 und den Konen 25, beispielsweise durch Schweißen, fest verbunden sind. Die Stützen 29 erstrecken sich von den Unterseiten der Kolonnenböden 21 bis zu den Oberseiten der Konen 25.

Die Flüssigkeitsverteiler 24 ihrerseits sind mittels Haltestangen 30 in der Kolonne 20 angeordnet. Hierfür weisen die Konen 25 Durchgänge für die Haltestangen 30 auf. Die Konen 25 sind an diesen Durchgängen mit den Haltestangen 30 axialfest, beispielsweise dauerhaft durch Schweißen, verbunden. Im vorliegenden Ausführbeispiel sind die Flüssigkeitsverteiler 24, und somit auch die mit diesen verbunden Kolonnenböden 21, durch vier Haltestangen 30, die gleichmäßig über den Umfang verteilt sind, in der Kolonne 20 angeordnet.

Auf diese Weise können eine Vielzahl von solchen Baueinheiten aus Kolonnenböden 21 und Flüssigkeitsverteilern 24 über Haltestangen 30 übereinander in der Kolonne 20 angeordnet werden. Die Haltestangen 30 selbst sind mittels geeigneter Befestigungen zwischen Kolonne 20 und Haltestangen 24 ortsfest in der Kolonne 20 angeordnet (nicht dargestellt).

Fig. 3 zeigt einen Querschnitt durch die Strippkolonne 20 aus Fig. 2 entlang der Linie A-A. In den Fig. 2 und 3 übereinstimmenden Bauteile sind mit den gleichen Bezugsziffern versehen. Es wird insofern auf die vorstehenden Ausführungen verwiesen. Der Querschnitt zeigt in der Draufsicht im wesentlichen einen Kolonnenboden 21 und einen Flüssigkeitsverteiler 24 mit Konus 25. Über den Umfang verteilt ist die Baueinheit aus Kolonnenboden 21 und Flüssigkeitsverteiler 24 mit vier Haltestangen 30 verbunden. Bezüglich der Durchmesserverhältnisse wird auf vorstehende Ausführungen verwiesen.

Die Strippkolonne 20 wird derart betrieben, daß die Ablauge schwallförmig von den Kolonnenböden 21 herunterströmt. Die von den Böden 21 abwärts fließende Ablauge trifft nach verlassen der Böden 21 auf den jeweils unter diesen angeordneten trichterförmigen Flüssigkeitsverteilern 24 auf, und zwar im wesentlichen auf der Oberfläche der Konen 25. Durch die trichterförmige, ins Kolonneninnere gerichtete Neigung der Konen wird die Ablauge in Richtung der Kolonnenachse 23 geführt. Am Innendurchmesser D_{Fi} der Flüssigkeitsverteiler 24 bzw. Konen 25 angelangt, verläßt die Ablauge die Flüssigkeitsvereiler schwallförmig und trifft auf den nachfolgenden Boden 21 auf. Die Randabdichtungen 26 verhindern, daß die Ablauge zwischen Kolonneninnenwand und Flüssigkeitsverteiler 24 passieren kann.

### Vergleichsbeispiel

In einer kontinuierlich arbeitenden Strippkolonne mit Ablaugeumlauf und mit konventioneller Füllkörperschüttung wurde eine Ablauge mit einem TOC (Total Organic Compounds)-Gehalt von 1 bis 4% behandelt. Der Kolonne wurde ein Feedstrom an Ablauge von 2200 kg/h zugeführt. Als Strippgas wurde methanhaltiges Heizgas verwendet. Die Strippung wurde bei einer Temperatur von etwa 36 °C und einem Druck von etwa 1,5 bar durchgeführt. Die Flüssigkeitsbelastung in der Kolonne (= Umlaufmenge) betrug 53 t/h. Der Feedstrom an Strippgas betrug 160 kg/h. Der TOC-Gehalt der Ablauge nach der Strippung betrug 200 bis 300 mg/l. Die Füllkörperschüttung mußte etwa alle 7 bis 14 Tage wegen Verstopfung gereinigt werden.

### Beispiel

In einer erfindungsgemäßen Strippkolonne 20 mit vorstehend zu den Fig. 2 und 3 beschriebenen Kolonneneinbauten, wurde unter den gleichen Bedingungen wie im Vergleichsbeispiel (Feedstrom an Ablauge, Feedstrom an Strippgas, Strippgas, Druck, Temperatur, Abmessungen Strippkolonne) Ablauge mit einem anfänglichen TOC-Wert von 1 bis 4% gestrippt. Die Flüssigkeitsbelastung in der Kolonne (= Umlaufmenge) wurde im Vergleich zu dem Vergleichsbeispiel um 8 t/h erhöht. Der TOC-Gehalt der Ablauge nach der Strippung betrug 200 bis 300 mg/l. Die Strippkolonne lief über mehr als 5 Monate störungsfrei. Eine Reinigung der Strippkolonne mußte nicht durchgeführt werden.

Die vorstehenden Beispiele zeigen, daß die vorliegende Erfindung gegenüber konventionellen Strippverfahren und Strippvorrichtungen zur Entfernung von Kohlenwasserstoffen aus einer Ablauge in Anlagen zur thermischen Spaltung von gesättigten Kohlenwasserstoffen erhebliche Vorteile aufweist. Die während der Strippung gebildeten und aus der Ablauge ausfallenden organischen Feststoffe setzen sich auf den Kolonneneinbauten nicht ab, sondern werden mit der Ablauge aus der Kolonne ausgetragen und können nachfolgend aus der Ablauge abgetrennt werden. Es treten keine Verstopfungen in der Kolonne auf. Eine Reinigung der Kolonne ist nicht mehr notwendig, oder zumindest in viel größeren zeitlichen Abständen als es bei konventionellen Strippkolonnen mit Füllkörperschüttung der Fall ist. Der TOC-Wert in der Ablauge nach der Strippung ändert sich gegenüber der konventionellen Strippkolonne überraschenderweise nicht. Die Umlaufmenge an Ablauge mußte in der erfindungsgemäßen Strippkolonne lediglich etwas erhöht werden. Der durch den erhöhten Flüssigkeitsumlauf etwas höhere Energieaufwand ist jedoch zu vernachlässigen gegenüber dem hohen wirtschaftlichen Vorteil, der dadurch entsteht, daß längere Stillstandzeiten der Strippkolonne durch Reinigungsvorgänge vermieden werden.

## Patentansprüche

1. Verfahren zur Entfernung von Kohlenwasserstoffen aus der Ablauge von Laugewäschern in Anlagen zur Spaltung von gesättigten Kohlenwasserstoffen, bei welchem die Ablauge in mindestens einer Kolonne (20) mit einem Strippgas, das die Kohlenwasserstoffe aufnimmt, im Gegenstrom in Kontakt gebracht wird, **dadurch gekennzeichnet, daß** die Strippung in einer Bodenkolonne (20) mit Kaskadenböden (21) durchgeführt wird.

2. Verfahren nach Anspruch 1, **dadurch gekennzeichnet, daß** die Ablauge in der Kolonne (20) über gewölbte Kaskadenböden (21) geführt wird.

3. Verfahren nach Anspruch 1 oder 2, **dadurch gekennzeichnet, daß** als Strippgas methanhaltiges Heizgas eingesetzt wird.

4. Verfahren nach einem der Ansprüche 1 bis 3, **dadurch gekennzeichnet, daß** aus der Ablauge langkettige Kohlenwasserstoffe, wie C₅₊-Kohlenwasserstoffe sowie Aromaten wie Benzol, entfernt werden.

5. Vorrichtung zur Entfernung von Kohlenwasserstoffen aus der Ablauge von Laugewäschern in Anlagen zur Spaltung von gesättigten Kohlenwasserstoffen, aufweisend mindestens eine Kolonne (20), in welcher die Ablauge mit einem Strippgas, das die Kohlenwasserstoffe aufnimmt, im Gegenstrom in Kontakt gebracht wird, **dadurch gekennzeichnet, daß** es sich bei der Kolonne um eine Bodenkolonne (20) mit Kaskadenböden (21) handelt.

6. Vorrichtung nach Anspruch 5, **dadurch gekennzeichnet, daß** die Kolonne (20) gewölbte Kaskadenböden (21) aufweist.

7. Vorrichtung nach Anspruch 5 oder 6, **dadurch gekennzeichnet, daß** die Kaskadenböden (21) eine geschlossene Oberfläche aufweisen.

8. Vorrichtung nach einem der Ansprüche 5 bis 7, **dadurch gekennzeichnet, daß** die Kaskadenböden (21) schalenförmig gewölbt sind.

9. Vorrichtung nach einem der Ansprüche 5 bis 7, **dadurch gekennzeichnet, daß** die Kaskadenböden (21) kugelschalenförmig gewölbt sind.

10. Vorrichtung nach einem der Ansprüche 5 bis 9, **dadurch gekennzeichnet, daß** die Kolonne (20) einen Innendurchmesser D_{K} und die Kaskadenböden (21) Durchmesser D_{B} aufweisen, wobei die Durchmesser im Verhältnis D_{K}/D_{B} von 1,25 bis 1,85 zueinander stehen.

11. Vorrichtung nach einem der Ansprüche 5 bis 10, **dadurch gekennzeichnet, daß** die Kolonne (20) des weiteren trichterförmige Flüssigkeitsverteiler (24) aufweist, welche die Ablauge auf die Kaskadenböden (21) führen.

12. Vorrichtung nach Anspruch 11, **dadurch gekennzeichnet, daß** die Kaskadenböden (21) mittels Stützen (29) auf den Flüssigkeitsverteilern (24) abgestützt sind.
